# EUROPÄISCHE PATENTSCHRIFT

(11) **EP 0 891 221 B1**
(45) Veröffentlichungstag und Bekanntmachung des Hinweises auf die Patenterteilung: **08.12.2004**
(21) Anmeldenummer: 97909103.0
(22) Anmeldetag: 31.10.1997
(51) Int. Cl.: B01D 63/06

(54) **MEMBRANMODUL FÜR EINE ANLAGE ZUR MEMBRANTRENNUNG**
MEMBRANE MODULE FOR A MEMBRANE SEPARATION SYSTEM
MODULE POUR UNE INSTALLATION DE SEPARATION PAR MEMBRANE

(30) Priorität: 07.11.1996 CH 274696
(43) Veröffentlichungstag der Anmeldung: 20.01.1999
(73) Patentinhaber: Bucher-Guyer AG, 8166 Niederweningen (CH)
(72) Erfinder: HARTMANN, Eduard, CH-5425 Schneisingen (CH)
(74) Vertreter: Patentanwälte Leinweber & Zimmermann
(86) Internationale Anmeldenummer: PCT/CH1997/000414
(87) Internationale Veröffentlichungsnummer: WO 1998/019778

(56) Entgegenhaltungen:
- WO-A-97/05946
- WO-A-97/30779
- DE-A- 2 529 977
- US-A- 3 294 504
- US-A- 5 202 023

## Beschreibung

Die Erfindung betrifft ein Membranmodul einer Anlage z ur Membrantrennung von Stoffgemischen nach dem Oberbegriff des Patentanspruchs 1.

Derartige Membranmodule sind als Bauelemente von Querstrom-Filtrationsanlagen bekannt. Sie umfassen meist mehrere Rohrmembranen, die als Filter wirksam sind. Die Rohrmembranen sind als poröse Rohre ausgebildet, welche entweder selbst als Membranfilter ausgebildet sind oder auf ihrer Oberfläche Filtrationsmembranen aus organischen oder anorganischen Werkstoffen tragen. Es sind Rohrmembranen mit innen oder aussen liegenden Membranen bekannt. Deren Innendurchmesser betragen von einigen Zehntelmillimetern bis zu etwa 100 Millimeter.

Um bei brauchbarer Filtrationsleistung tragbare Baulängen der Membranmodule zu erreichen, wird eine kleine oder grössere Anzahl gerader Rohrmembranen in einem geraden Hüllrohr montiert. Dieses Modulrohr besitzt einen für alle Rohrmembranen gemeinsamen Ein- und Auslass für das zu filtrierende Medium als Retentat und einen oder zwei Auslässe für ein Filtrat als Permeat.

Bekannt sind auch Membranmodule, welche als sogenannte Wickelmodule ausgebildet sind. Hierbei sind tuchartige Filter-Membranen zu einer langgestreckten Rolle aufgewickelt, in welcher der Durchfluss des Retentates und der Abfluss der Permeates durch mit eingewickelte dünne elastische Distanzhalter oder Netze ermöglicht wird. Wickelmodule dieser Bauart sind im Hinblick auf ihre Filtrationsleistung sehr preisgünstig, sie eignen sich aber wegen ihrer Neigung zu Verstopfungen nicht zur Trennung von Stoffgemischen mit hohen Feststoffanteiten. Demgegenüber lassen sich mit Rohrmembranen von einigen Millimeter Innendurchmesser auch Stoffgemische mit hohen Feststoffanteilen ohne Verstopfungsgefahr verarbeiten, wie z. B. gepresste Fruchtsäfte.

Da die flächenbezogene spezifische Filtrationsleistung bekannter Rohrmembranen aus Polysulfon oder PDVF relativ gering ist, wird zur Erzielung grösserer wirtschaftlich brauchbarer Filtrationsleistungen eine Anzahl von Modulen, jedes umfassend z.B. 19 Rohrmembranen von je 3 m Länge, in Serie und auch parallel zu einer Anlage zusammengeschaltet.

Ist die Anzahl von in Serie geschalteten Modulen hoch, bekannt sind bis etwa 16 Module pro Serie, so werden diese über 180 Grad Krümmer-Bögen miteinander verbunden. Umfasst die Gruppe auch nur 5 gleichzeitig parallel gefahrene Serien oder Passe, so müssen 80 Module möglichst kompakt in einer Einheit angeordnet werden, um eine Membran-Filterfläche von ca. 180m² zu erzielen. Die einzelnen Module werden dazu auf Trägerarmen in Gestellen gelagert, und die zahlreichen retentatseitigen und permeatseitigen Verbindungen werden erstellt. Dabei ergeben sich folgende Probleme:

Pro Membranmodul sind 4 Rohranschlüsse und 2 bis 3 Auflagen auf Trägerarmen erforderlich. Bei einer Anlage mit 80 Modulen führen diese Anschlüsse und Auflagen zu 80 Verbindungsbögen, 85 Schlauchverbindungen und 320 Anschlüssen, also zu hohen Anlagekosten, und reduzieren damit die Wirtschaftlichkeit der Anlage.

Trennnmembranen haben nur eine begrenzte Lebensdauer. Die Membranmodule sind somit Verschleissteile, sie müssen in gewissen Zeitabständen ersetzt werden.

Der Aufwand für Montage und Demontage, sowie für die komplizierte Konstruktion ist bei dieser Bauart demzufolge enorm.

Ferner sind Membranmodule nach dem Oberbegriff des Patentanspruchs 1 in der DE 25 29 977 A1 beschrieben. In der US 3,294,504 sind Gas-Diffusionszellen mit seilartig verdrehten Glasrohren mit Durchmessern von weniger als 1 mm beschrieben.

Der Erfindung liegt deshalb die Aufgabe zugrunde, die angeführten Probleme weitgehend zu beheben.

Gemäß der Erfindung wird die Lösung dieser Aufgabe durch die im kennzeichnenden Teil des Anspruchs 1 angegebene Weiterbildung der bekannten Membranmodule gelöst.

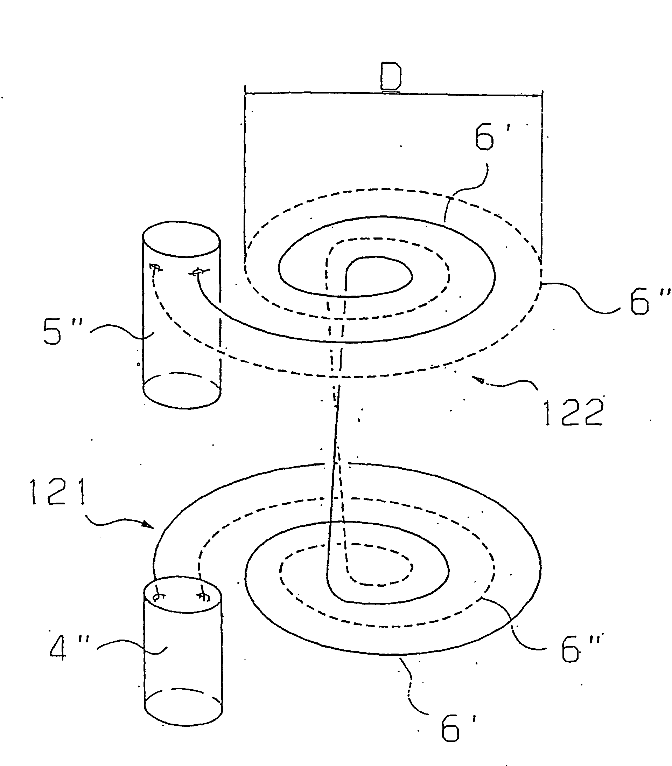

Ausführungsbeispiele der Erfindung sind in der folgenden Beschreibung näher erläutert. Die einzige Figur der Zeichnung zeigt ein Schema einer zweilagigen scheibenartigen Flachwicklung aus zwei durchgehenden Rohrmembranen zur Vergrösserung des Durchmessers und der Filterfläche der Wicklung.

Will man bei einer im Hinblick auf den Druckabfall beschränkten Länge der Rohrmembranen eine Flachwicklung von nur zwei axialen Lagen mit grosser Filterfläche realisieren, so kann man die Wicklung aus zwei radial nebeneinander liegenden Membranrohren 6', 6" bilden. Damit sich an den Sammelrohren 4", 5" etwa gleich lange Endabschnitte der Membranrohre 6', 6" ergeben, kehrt man dabei zweckmässig die radiale Reihenfolge der Membranrohre 6', 6" in der einen Lage 121 gegenüber der anderen Lage 122 beim zentralen Übergang um, wie es die Figur zeigt. Der dabei vergrösserte Durchmesser D der Wicklung ist in vielen Fällen nicht störend.

## Patentansprüche

1. Membranmodul für eine Anlage zur Membrantrennung von Stoffgemischen umfassend mehrere Rohrmembranen (6), die in gebogener Form und aufgewickelter Form im Membranmodul angeordnet sind, **dadurch gekennzeichnet, dass** mindestens eine Wicklung aus einer Gruppe von durchgehenden, radial nebeneinander liegenden Rohrmembranen (6', 6") gleicher Länge in der aufgewickelten Form als scheibenartige Flachwicklung axial zur Wickelachse nur zwei Lagen (121, 122) aufweist, wobei die radiale Reihenfolge der Rohrmembranen (6', 6") in der Gruppe in der einen Lage (121) gegenüber der anderen Lage (122) umgekehrt ist, wobei mehrere Rohrmembranen (6', 6") am Beginn und am Ende der Wicklung in je ein gemeinsames Sammelrohr (4", 5") zur parallelen Zu- und Abführung des zu trennenden Stoffgemisches einmünden.

## Claims

1. Membrane module for a system for the membrane separation of mixtures, including a plurality of tubular membranes (6) arranged in bent form and in wound form in the membrane module, **characterised in that** at least one coil consisting of a group of continuous tubular membranes (6', 6") of the same length situated radially alongside one another has only two layers (121, 122) axially to the winding axis in the wound form in the form of a disc-like flat coil, the radial sequence of the tubular membranes (6', 6") in the group in one layer (121) being reversed compared to the other layer (122), and a plurality of tubular membranes (6', 6") at the beginning and at the end of the coil leading into respective common manifolds (4", 5") for the parallel supply and discharge of the mixture to be separated.

## Revendications

1. Module à membranes pour une installation de séparation de mélanges de substances, à l'aide de membranes comprenant plusieurs membranes tabulaires (6) agencées sous une forme cintrée et enroulée, dans ledit module à membranes, **caractérisé par le fait qu'**au moins un enroulement, constitué d'un groupé de membranes tubulaires ininterrompues (6', 6") de longueurs identiques, agencées en juxtaposition radiale sous la forme enroulée, en tant qu'enroulement aplati de type discoïdal, comprend uniquement deux couches (121, 122) dans le sens axial vis-à-vis de l'axe de l'enroulement, la succession radiale desdites membranes tubulaires (6', 6") étant inversée, dans le groupe situé dans l'une (121) des couches, vis-à-vis de l'autre couche (122), sachant que plusieurs membranes tubulaires (6', 6") débouchent respectivement dans une tubulure collectrice commune (4", 5"), au début et à la fin de l'enroulement, en vue de l'amenée et de l'évacuation parallèles du mélange de substances devant être séparé.
